# EUROPÄISCHE PATENTSCHRIFT

(11) **EP 1 964 592 B1**
(45) Veröffentlichungstag und Bekanntmachung des Hinweises auf die Patenterteilung: **03.07.2013**
(21) Anmeldenummer: 08101888.9
(22) Anmeldetag: 22.02.2008
(51) Int. Cl.: A62C 2/06, F16L 5/04

(54) **Vorrichtung zur Durchführung eines Kunststoffrohres durch eine Decke**
Device for running a plastic conduit through a ceiling
Dispositif destiné au passage d'un tuyau en plastique à travers un plafond

(30) Priorität: 27.02.2007 DE 202007002824 U
(43) Veröffentlichungstag der Anmeldung: 03.09.2008
(73) Patentinhaber: IZEG Informationszentrum Entwässerungstechnik Guss e.V., 53113 Bonn (DE)
(72) Erfinder: Ishorst, Bernd, 53340 Meckenheim (DE)
(74) Vertreter: von Kreisler Selting Werner

(56) Entgegenhaltungen:
- EP-A- 0 541 506
- CH-A5- 675 211
- DE-A1- 19 524 766
- US-A- 3 678 634

## Beschreibung

Die Erfindung betrifft eine Vorrichtung zur Durchführung eines Kunststoffrohres durch eine Decke.

In Gebäuden werden Abflussrohre, die Abwasser zur Kanalisation führen, als Fallrohre durch die Gebäudedecken hindurchgeführt. Wenn derartige Abwasserrohre aus Kunststoff bestehen, besteht im Fall eines Brandes ein erhöhtes Risiko, dass der Brand sich durch die Raumdecke hindurch in einen darüber liegenden Raum hinein fortsetzt. Abflussrohre aus Kunststoff haben eine niedrige Schmelztemperatur und das Kunststoffmaterial ist brennbar. Ein Brand, der in einem Stockwerk ausbricht, breitet sich durch die Deckenöffnung hindurch in das benachbarte Stockwerk aus.

In DE 202 00 625 U1 und DE 101 26 998 A1 ist jeweils eine Brandschutzsperre beschrieben, die in Verbindung mit dem Deckendurchgang eines Kunststoffrohres installiert wird und eine Intumeszenzmasse enthält. Im Brandfall expandiert die Intumeszenzmasse auf ein Vielfaches ihres ursprünglichen Volumens und verschließt dadurch die Deckenöffnung. Das die Intumeszenzmasse nicht brennbar ist, verhindert sie eine Brandausdehnung in das benachbarte Stockwerk.

Die Brandschutzvorschriften sehen vor, dass Brandschutzmanschetten an Abflussrohren aus Kunststoff jeweils unterhalb einer Deckendurchführung angebracht sein müssen. Eine solche Brandschutzmanschette verhindert, dass ein Brand sich von einem Stockwerk in das darüber liegende Stockwerk fortsetzt. Dies liegt daran, dass in dem Stockwerk, in dem der Brand ausbricht, die Brandschutzmanschette anspricht und die Deckenöffnung verschließt. Eine Verhinderung der Brandausbreitung in das darunter liegende Stockwerk sehen die Brandschutzvorschriften nicht vor. Der Grund liegt darin, dass brennende Partikel in einem senkrechten Abflussrohr herunterfallen, so dass ein definierter Ort nicht bestimmt werden kann, an dem der Brand in dem darunter liegenden Stockwerk sich ausbreitet.

Versuche des Erfinders haben gezeigt, dass eine erhebliche Gefahr der Brandausbreitung auch für das unterhalb des Brandherdes liegende Stockwerk besteht. Wenn der Brand das Kunststoffrohr erfasst hat, tropft flüssiger Kunststoff in dem Rohr herab. Wenn sich dieser Kunststoff auf dem Boden, an einer Abzweigung oder an einer Irregularität des Abflussrohres absetzt, brennt er dort weiter und bildet seinerseits einen neuen Brandherd, der relativ weit von der Deckenöffnung entfernt ist. Es besteht also durchaus eine Gefahr, dass ein Brand sich auch in das jeweils darunter liegende Stockwerk hinein fortsetzt. Dieser Gefahr kann nicht durch den Einbau einer Brandschutzmanschette in die Deckenöffnung begegnet werden, weil herabtropfender, heißer Kunststoff durch eine solche Brandschutzmanschette hindurchfallen würde, ohne die Intumeszenzmasse zum Expandieren zu bringen.

Der Oberbegriff des Patentanspruchs 1 geht aus von einer Decken-Rohrdurchführung, wie sie in CH 675211 A5 beschrieben ist. Diese Deckendurchführung weist ein kastenförmiges Gehäuse auf, das unter einer Decke befestigt wird und durch welches ein Kunststoffrohr hindurchgeht. Das Gehäuse enthält eine im Brandfalle aufschäumende Materie, welche eine schwenkbare Klappe bewegt und dadurch das an einem Ende zerstörte Rohr verschließt.

In DE 195 24 766 A1 ist eine Brandschutz-Sperrvorrichtung beschrieben, die ein Gehäuse mit zwei entgegengesetzten Stutzen aufweist, wobei auch hier in dem Gehäuse eine Packung aus einem bei Hitzeeinwirkung aufschäumenden Material angeordnet ist. Ferner befindet sich in dem Gehäuse eine Klappe, die bei Freigabe durch eine Arretiervorrichtung durch ihr Eigengewicht in eine horizontale Schließstellung kippt.

Der Erfindung liegt die Aufgabe zugrunde, eine Vorrichtung zur Durchführung eines Kunststoffrohres durch eine Decke zu schaffen, die eine Brandausbreitung durch die Decke hindurch nach unten verhindert.

Die erfindungsgemäße Decken-Rohrdurchführung ist durch den Anspruch 1 definiert. Das Kunststoffrohr weist unterhalb der Decke einen Bogen auf, wobei das Isoliergehäuse den Bogen umschließt.

Durch die Erfindung wird unter der Decke eine "Falle" für herabtropfendes Kunststoffmaterial installiert, wodurch verhindert wird, dass das geschmolzene

Kunststoffmaterial undefiniert weit in dem Kunststoffrohr herabfällt. Die Entzündung des herabtropfenden Kunststoffs wird in das Isoliergehäuse verlegt, das unmittelbar unterhalb der Decke angeordnet ist. Das Innere des Isoliergehäuses ist somit zum Auffangen des Brandes vorgesehen und zu dessen Isolierung von dem darunter liegenden Raum. Der Begriff "Isolierung" ist in diesem Zusammenhang als Verhinderung einer Brandausbreitung zu verstehen. Das Isoliergehäuse ist nicht brennbar und dämmt den Brand auf das Volumen unterhalb der Deckenöffnung ein. Da das Kunststoffrohr durch die Deckenöffnung senkrecht hindurchführt und durch eine Wand aus dem Isoliergehäuse austritt, befindet sich im Isoliergehäuse ein Rohrbogen. Der Rohrbogen bildet die Stelle, an der sich herabtropfendes, heißes Kunststoffmaterial sammelt. Dadurch wird der Sekundär-Brandherd gewollt an einer bestimmten Stelle erzeugt.

Vorzugsweise besteht das Isoliergehäuse aus einer Tragstruktur aus Blech und einer Dämmschicht. Die Dämmschicht bewirkt eine thermische Isolierung des Inneren des Isoliergehäuses und verhindert eine Ausstrahlung des Brandes nach außen. Die Tragstruktur besteht aus Metallblech oder aus einem anderen, nicht brennbaren, Plattenmaterial. Das Isoliergehäuse weist eine Öffnung auf, deren Rand unmittelbar mit der Unterseite der Raumdecke verbunden ist. Auf diese Weise bildet das Isoliergehäuse einen hermetisch abgeschlossenen Raum, in dem sich der Bogen des Kunststoffrohres befindet. Die Rohrdurchführungsöffnung des Isoliergehäuses ist mit einer Brandschutzmanschette versehen, so dass sie sich schließt, wenn das Kunststoffrohr durch ein Feuer im Innern des Isoliergehäuses schmilzt.

Die Erfindung betrifft ferner eine installierte Rohrdurchführung eines Kunststoffrohres durch eine Decke mit den Merkmalen des Anspruchs 5.

Im Folgenden werden unter Bezugnahme auf die Zeichnungen Ausführungsbeispiele der Erfindung näher erläutert.

Es zeigen:
- Fig. 1: eine Rohrdurchführung mit Umlenkung eines Kunststoffrohres durch eine Decke im Vertikalschnitt und
- Fig. 2: eine Rohrdurchführung bei einem Rohr mit Versprung.

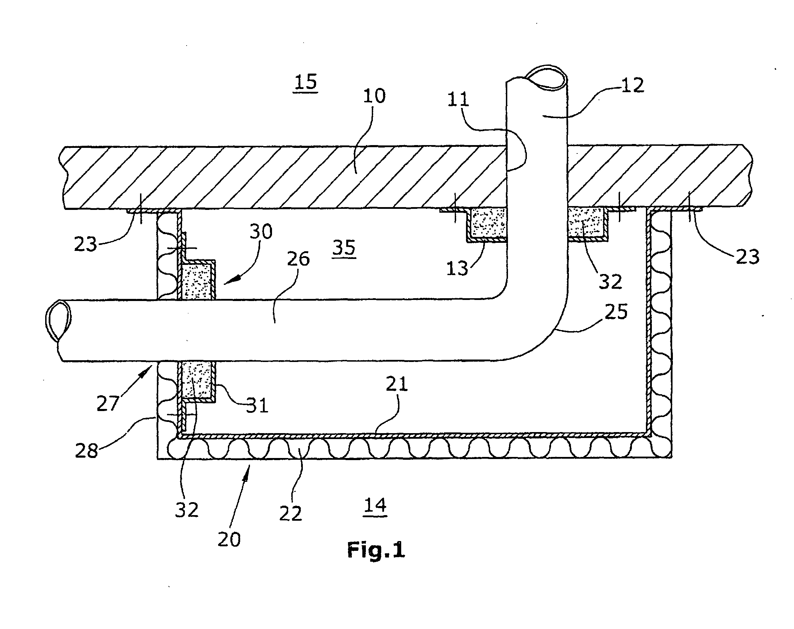

Gemäß Fig. 1 ist eine Decke 10, die beispielsweise aus Beton besteht, mit einer Deckenöffnung 11 versehen, durch die ein Kunststoffrohr 12 senkrecht hindurchgeht. Das Kunststoffrohr 12 ist ein Abflussrohr. Es kann sich aus mehreren, durch Muffen miteinander verbundenen, Rohrabschnitten zusammensetzen.

Unmittelbar unter der Deckenöffnung 11 ist um das Kunststoffrohr 12 herum eine Brandschutzmanschette 13 angebracht, die in üblicher Weise an der Decke montiert ist. Die Brandschutzmanschette 13 enthält eine im Brandfall expandierende Intumeszenzmasse, die dann die Deckenöffnung 11 verschließt. Die Brandschutzmanschette 13 dient in üblicher Weise dazu, einen in dem unteren Raum 14 entstehenden Brand daran zu hindern, in den oberen Raum 15 hinein vorzudringen.
An der Unterseite der Decke 10 ist das Isoliergehäuse 20 befestigt. Dieses weist eine kastenförmige Tragstruktur 21 und eine an der Außenseite der Tragstruktur angebrachte Dämmung 22 auf. Die Tragstruktur 21 besteht aus Stahlblech. Sie bildet eine Wanne mit einem flanschartigen oberen Rand 23, der an der Unterseite der Decke angeschraubt ist. Die Dämmung 22 besteht aus nicht brennbarem Material, wie beispielsweise Mineralwolle.

Das Kunststoffrohr 12 weist unterhalb der Deckenöffnung 11 einen Bogen 25 auf, an den sich ein im wesentlichen horizontaler Rohrabschnitt 26 anschließt. Dieser führt durch eine Rohrdurchführung 27, die in einer vertikalen Seitenwand 28 des Isoliergehäuses 20 vorgesehen ist. Die Rohrdurchführung 27 enthält eine Brandschutzmanschette 30 aus einem äußeren nicht brennbaren Mantel 31 und einer in dem Mantel enthaltenen Intumeszenzmasse 32.

Wenn in dem oberen Raum 15 ein Feuer ausbricht, welches das Kunststoffrohr 12 erfasst, schmilzt das Material des Kunststoffrohres. Dadurch fallen in dem Rohr Tropfen herab, die am Bogen 25 aufschlagen und dort das Kunststoffrohr zum Schmelzen bringen bzw. einen neuen Brandherd bilden. Dieser ist zwischen der Decke 10 und dem Isoliergehäuse 20 eingekapselt. Durch ein Feuer in dem Innenraum 35 des Isoliergehäuses 20 werden die beiden Brandschutzmanschetten 13 und 30 ausgelöst, so dass die Deckenöffnung 11 und die Rohrdurchführung 27 durch die expandierende Intumeszenzmasse verschlossen werden. Dadurch wird das Feuer auf den hermetisch abgeschlossenen Innenraum 35 des Isoliergehäuses 20 beschränkt und in diesem Innenraum 35 erstickt.

Wenn in dem Raum 14 ein Feuer ausbricht, spricht die Brandschutzmanschette 30 an, wodurch die Rohrdurchführung 27 verschlossen wird. Dadurch wird verhindert, dass der Brand sich in das obere Stockwerk 15 ausbreiten kann.

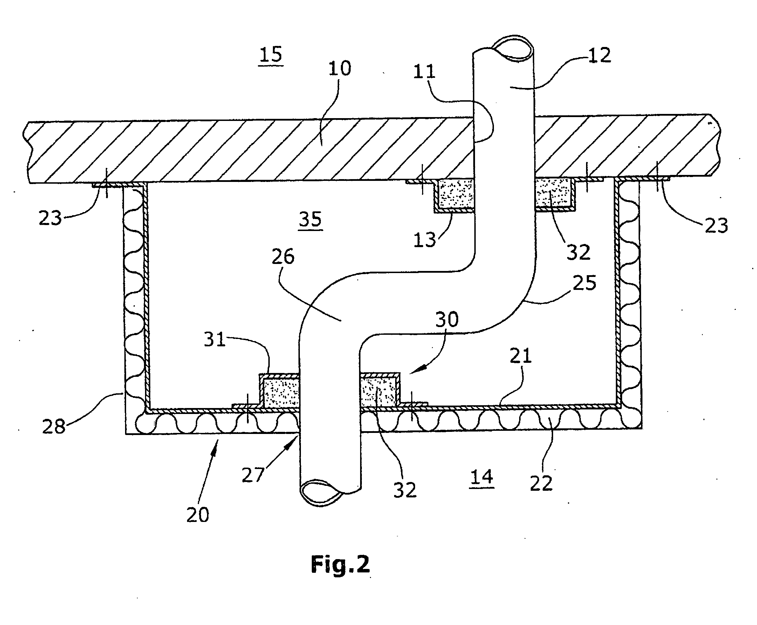

Fig. 2 zeigt ein Ausführungsbeispiel, bei dem das Rohr 12 einen S-förmigen Versprung bzw. einen Verzug aufweist. Hierbei führt das Rohr nicht durch die Seitenwand 28 des Isoliergehäuses 20 sondern durch dessen Bodenwand.

## Patentansprüche

1. Decken-Rohrdurchführung eines Kunststoffrohres (12) durch eine Decke (10), mit einem unter der Decke befestigten Isoliergehäuse (20), das ein Gehäuse-Rohrdurchführung (27) für das Kunststoffrohr (12) enthält, wobei an der Gehäuse-Rohrdurchführung (27) eine Brandschutzmanschette (30) vorgesehen ist,
**dadurch gekennzeichnet,**
**dass** das Kunststoffrohr (12) unterhalb der Decke (10) einen Bogen aufweist und dass das Isoliergehäuse (20) den Bogen umschließt.

2. Rohrdurchführung nach Anspruch 1, **dadurch gekennzeichnet, dass** eine weitere Brandschutzmanschette (13) den über dem Bogen (25) befindlichen senkrechten Teil des Kunststoffrohres (12) unmittelbar unter der Decke (10) umschließt.

3. Rohrdurchführung nach Anspruch 1 oder 2, **dadurch gekennzeichnet, dass**
das Isoliergehäuse (20) eine Tragstruktur (21) aus Blech und eine Dämmschicht (22) aufweist.

4. Rohrdurchführung nach einem der Ansprüche 1 - 3, **dadurch gekennzeichnet, dass** die Dämmschicht (22) an der Außenseite der Tragstruktur (21) angeordnet ist.

5. Rohrdurchführung nach einem der Ansprüche 1 - 4, **dadurch gekennzeichnet, dass** eine nicht mit dem Isoliergehäuse (20) verbundene weitere Brandschutzmanschette (13) vorgesehen ist.

6. Rohrdurchführung nach einem der Ansprüche 1 - 5, **dadurch gekennzeichnet, dass** die Gehäuse-Rohrdurchführung (27) an einer vertikalen Seitenwand (28) des Isoliergehäuses (20) vorgesehen ist.

7. Rohrdurchführung nach einem der Ansprüche 1 - 6, **dadurch gekennzeichnet, dass** das Kunststoffrohr (12) einen S-förmigen Versprung aufweist und dass die Gehäuse-Rohrdurchführung (27) an einer Bodenwand des Isoliergehäuses (20) vorgesehen ist.

## Claims

1. Ceiling pipe passage for passing a plastic pipe (12) through a ceiling (10), comprising an insulating housing (20) fastened under the ceiling, the housing comprising a housing pipe passage (27) for the plastic pipe (12), a fire protection sleeve (30) being provided at the housing pipe passage (27),
**characterized in**
**that** the plastic pipe (12) has a bend below the ceiling (10) and that the insulating housing (20) surrounds the bend.

2. Pipe passage of claim 1, **characterized in that** the vertical part of the plastic pipe (12) above the bend (25) is immediately a further fire protection sleeve (13) below the ceiling (10).

3. Pipe passage of claim 1 or 2, **characterized in that** the insulating housing (20) comprises a support structure (21) of sheet metal and an insulation layer (22).

4. Pipe passage of one of claims 1-3, **characterized in that** the insulation layer (22) is arranged on the outer side of the support structure (21).

5. Pipe passage of one of claims 1-4, **characterized in that** a further fire protection sleeve (13) is provided that is not connected with the insulating housing (20).

6. Pipe passage of one of claims 1-5, **characterized in that** the housing pipe passage (27) is provided in a vertical side wall (28) of the insulating housing (20).

7. Pipe passage of one of claims 1-6, **characterized in that** the plastic pipe (12) has an S-shaped offset and that the housing pipe passage (27) is provided in a bottom wall of the insulating housing (20).

## Revendications

1. Passage d'un tuyau en matière plastique (12) à travers un plafond (10), comprenant un logement isolant (20) fixé sous le plafond, logement isolant qui comprend un passage (27), à travers le logement, pour le tuyau en matière plastique (12), où une garniture coupe-feu (30) est prévue sur le passage (27) du tuyau, à travers le logement,
**caractérisé**
**en ce que** le tuyau en matière plastique (12) présente un coude au-dessous du plafond (10), et en ce que le logement isolant (20) entoure le coude.

2. Passage d'un tuyau selon la revendication 1, **caractérisé en ce qu'**une autre garniture coupe-feu (13) entoure, juste au-dessous du plafond (10), la partie verticale du tuyau en matière plastique (12) se trouvant au-dessus du coude (25).

3. Passage d'un tuyau selon la revendication 1 ou 2, **caractérisé en ce que** le logement isolant (20) présente une structure porteuse (21) se composant d'une tôle et d'une couche isolante (22).

4. Passage d'un tuyau selon l'une quelconque des revendications 1 à 3, **caractérisé en ce que** la couche isolante (22) est disposée sur le côté extérieur de la structure porteuse (21).

5. Passage d'un tuyau selon l'une quelconque des revendications 1 à 4, **caractérisé en ce qu'**il est prévu une autre garniture coupe-feu (13) non reliée au logement isolant (20).

6. Passage d'un tuyau selon l'une quelconque des revendications 1 à 5, **caractérisé en ce que** le passage (27) du tuyau, à travers le logement, est prévu sur une paroi latérale verticale (28) du logement isolant (20).

7. Passage d'un tuyau selon l'une quelconque des revendications 1 à 6, **caractérisé en ce que** le tuyau en matière plastique (12) présente un profil coudé en forme de S, et **en ce que** le passage (27) du tuyau, à travers le logement, est prévu sur une paroi du fond du logement isolant (20).
